# EUROPÄISCHE PATENTSCHRIFT

(11) **EP 1 600 340 B1**
(45) Veröffentlichungstag und Bekanntmachung des Hinweises auf die Patenterteilung: **16.03.2011**
(21) Anmeldenummer: 04012612.0
(22) Anmeldetag: 27.05.2004
(51) Int. Cl.: B60R 21/16

(54) **Airbaganordnung**
Airbag arrangement
Ensemble coussin de sécurité

(43) Veröffentlichungstag der Anmeldung: 30.11.2005
(73) Patentinhaber: Delphi Technologies, Inc., Troy, MI 48007 (US)
(72) Erfinder: Guthke, Detlev, 58089 Hagen (DE); Maiwald, Helmut, 51515 Kürten (DE); Tessarek, Artur, 44797 Bochum (DE)
(74) Vertreter: Denton, Michael John

(56) Entgegenhaltungen:
- DE-A- 10 056 298
- US-B1- 6 231 072
- US-B1- 6 457 740
- PATENT ABSTRACTS OF JAPAN Bd. 1998, Nr. 01, 30. Januar 1998 (1998-01-30) & JP 9 254737 A (TOYOTA MOTOR CORP), 30. September 1997 (1997-09-30)

## Beschreibung

Die Erfindung betrifft eine Airbaganordnung gemäß dem Oberbegriff des Anspruchs 1, wie sie beispielsweise aus der JP 09 254 737 A bekannt geworden ist.

Derartige Airbaganordnungen sind grundsätzlich bekannt und dienen dazu, den betreffenden Fahrzeuginsassen bei einem Unfall zu schützen. Insbesondere sind Kopfairbags bekannt, die im zusammengefalteten Zustand an einem Dachlängsträger des Fahrzeugs angeordnet sind und sich beim Aufblasen nach unten ausbreiten, um ein vor der Seitenwand des Fahrzeugs und insbesondere vor den Seitenfenstern liegendes flächiges Schutzpolster zu bilden.

Solche Airbaganordnungen können aber nicht dem Umstand Rechnung tragen, dass die derzeit im Fahrzeugbau zum Einsatz kommenden, Längs-und Querträger umfassenden Dachkonstruktionen und vor allem die Haltegriffe und deren Befestigungskonstruktionen harte Dachstrukturen darstellen, die insbesondere bei einen Seitenaufprall und einen schrägen Frontalaufprall einschließlich eines Fahrzeugüberschlags berücksichtigenden Unfallszenarien kritische Stellen für die Insassen darstellen können. Hierbei ist zu berücksichtigen, dass in Abhängigkeit von dem jeweiligen Anwendungsprofil die Befestigungskonstruktionen der Haltegriffe Zugkräfte bis zu 1500 N aufnehmen müssen. Aufwändige Maßnahmen, die bislang getroffen wurden, um die Befestigungskonstruktionen gleichzeitig zumindest in einem gewissen Maße nachgiebig zu gestalten, können allenfalls teilweise Abhilfe schaffen.

Aufgabe der Erfindung ist es, eine Airbaganordnung der eingangs genannten Art zu schaffen, mit welcher der Schutz vor harten Dachstrukturen weiter verbessert werden kann.

Die Lösung dieser Aufgabe erfolgt erfindungsgemäß durch die Merkmale des Anspruchs 1. Gemäß der Erfindung ist die Dachauskleidung insbesondere zu Beginn des Aufblasvorgangs durch den sich ausbreitenden Luftsack in eine Freigabeposition bewegbar. Auf diese Weise sorgt der sich ausbreitende Luftsack selbst dafür, dass ihm durch die sich aus der Normalposition weg bewegende Dachauskleidung der Weg in die Schutzposition "frei gemacht" wird. Anderenfalls einer Ausbreitung des Luftsacks, z.B. dessen Kopfschutzabschnitt, in die Schutzposition im Wege stehende Hindernisse können hierdurch sozusagen umgangen werden. Bei derartigen Hindernissen kann es sich insbesondere gerade um die harten Dachstrukturen handeln, vor denen der Kopf des Fahrzeuginsassen durch den Kopfschutzabschnitt des Luftsacks geschützt werden soll. Bei einer solchen harten Dachstruktur handelt es sich insbesondere um die eingangs erwähnten Handgriffe für die Fahrzeuginsassen. Derartige Haltegriffe können naturgemäß von der Dachauskleidung nicht verdeckt werden. Vielmehr sind die Dachauskleidungen häufig im Bereich der Haltegriffe ausgespart und im die Aussparung begrenzenden Randbereich mit einer Vertiefung versehen, um dem Fahrzeuginnenraum ein ästhetisch ansprechendes Erscheinungsbild zu verleihen. Indem der sich ausbreitende Luftsack bzw. ein Schutzabschnitt des Luftsacks die Dachauskleidung vom Fahrzeugdach weg nach innen drückt, kann sich der Kopfschutzabschnitt weiterhin entlang der Rückseite der Dachauskleidung und zusätzlich an dem Haltegriff vorbei in die Schutzposition ausbreiten.

Die aufgrund des bislang im Dachbereich unzureichenden Schutzes bestehende Schutzlücke wird durch das Zusammenwirken zumindest eines Teils des Luftsacks mit einer auch als Fahrzeughimmel bezeichneten Dachauskleidung geschlossen. Ein unmittelbarer Kontakt des Kopfes des Fahrzeuginsassen mit der Dachauskleidung alleine ist unproblematisch, wenn sichergestellt ist, dass sich auf der Rückseite der Dachauskleidung ein Schutzpolster befindet, d.h. die Dachauskleidung gewissermaßen hinterfüttert ist.

Vorteilhafte Ausführungsformen der Erfindung sind in den abhängigen Ansprüchen, der Beschreibung sowie der Zeichnung angegeben.

So ist gemäß einer bevorzugten Weiterbildung der Erfindung vorgesehen, dass die Dachauskleidung als Führung für den sich ausbreitenden Kopfschutzabschnitt des Luftsacks ausgebildet ist. Hierdurch wird die Rückseite der Dachauskleidung dazu genutzt, eine sichere bestimmungsgemäße Ausbreitung des Luftsacks zu gewährleisten. Eine eventuell vorgesehene spezielle Ausgestaltung und/oder Faltung zumindest des Kopfschutzabschnitts des Luftsacks, die bereits eine gewünschte Entfaltungscharakteristik in die gewünschte Ausbreitungsrichtung bedingt, kann hierdurch in vorteilhafter Weise unterstützt werden.

In einem weiteren bevorzugten Ausführungsbeispiel der Erfindung ist vorgesehen, dass die Dachauskleidung an zumindest einer dachfesten Halterung fixierbar und die Fixierung durch den sich ausbreitenden Luftsack, insbesondere dessen Kopfschutzabschnitt, lösbar ist.

Zur Fixierung der Dachauskleidung an der Halterung kann insbesondere eine Clipsverbindung und/oder eine Überlappung vorgesehen sein. Durch eine solche Fixierung kann die zum Lösen der Dachauskleidung von der Halterung erforderliche Kraft, die von dem sich ausbreitenden Luftsack aufgebracht werden muss, mit ausreichender Genauigkeit vorgegeben werden, so dass zuverlässig sichergestellt ist, dass sich die Dachauskleidung löst und der Kopfschutzabschnitt in die Schutzposition bewegen kann.

Vorzugsweise ist die Dachauskleidung mit einem eine Aussparung für eine harte Dachstruktur begrenzenden Randbereich am Fahrzeugdach fixierbar. Der erfindungsgemäße Luftsack ist vorzugsweise im Bereich des Übergangs zwischen Fahrzeugdach und Fahrzeugseitenwand, insbesondere an einem Dachlängsträger, anbringbar.

In einem weiteren bevorzugten Ausführungsbeispiel der Erfindung ist vorgesehen, dass der Luftsack zusätzlich zu dem Kopfschutzabschnitt einen Seitenschutzabschnitt aufweist. Hierdurch erfüllt der erfindungsgemäße Luftsack eine doppelte Schutzfunktion, d.h. die Funktion eines herkömmlichen Kopfairbags wird erfindungsgemäß durch den sich beim Aufblasen hinter der Dachauskleidung ausbreitenden Kopfschutzabschnitt in vorteilhafter Weise erweitert.

Sowohl der Kopfschutzabschnitt als auch der Seitenschutzabschnitt des Luftsacks sind im aufgeblasenen Zustand vorzugsweise jeweils von flächiger Gestalt.

Insbesondere kann erfindungsgemäß vorgesehen sein, dass in einem senkrecht zur Fahrzeuglängsachse verlaufenden Querschnitt der Kopfschutzabschnitt und der Seitenschutzabschnitt des Luftsacks im aufgeblasenen Zustand einen stumpfen Winkel bilden.

Der Luftsack kann im aufgeblasenen Zustand insbesondere von schmetterlingsartiger Gestalt sein, wobei der Kopfschutzabschnitt und der Seitenschutzabschnitt des Luftsacks die Schmetterlingsflügel bilden.

Durch einen derartigen Luftsack ist der Kopf des Fahrzeuginsassen sowohl bezüglich der Seitenwand als auch des Fahrzeugdaches und insbesondere auch im Bereich des Übergangs zwischen Fahrzeugdach und Seitenwand im Bereich des Dachlängsträgers optimal geschützt.

In einer weiteren Ausführungsform der Erfindung ist die Faltung des Luftsacks derart gebildet, dass zumindest der Kopfschutzabschnitt des Luftsacks durch das Aufblasen entrollbar oder ausgehend von z.B. einer so genannten Z-Faltung entfaltbar ist. Hierdurch kann in besonders zuverlässiger Weise sichergestellt werden, dass sich der Kopfschutzabschnitt des Luftsacks entlang der Rückseite der Dachauskleidung ausbreitet.

Die Erfindung wird im Folgenden beispielhaft unter Bezugnahme auf die Zeichnung beschrieben. Es zeigen:
- Fig. 1: in einem senkrecht zur Fahrzeuglängsachse verlaufenden Teilquerschnitt durch die Dachkonstruktion eines Fahrzeugs die erfindungsgemäße Airbaganordnung im Normalzustand mit zusammengefaltetem Luftsack,
- Fig. 2: die Anordnung von Fig. 1 kurz nach Beginn eines Aufblasvorgangs,
- Fig. 3: die Anordnung von Fig. 1 im gegenüber Fig. 2 weiter aufgeblasenen Zustand, und
- Fig. 4: die Anordnung von Fig. 1 mit vollständig aufgeblasenem Luftsack.

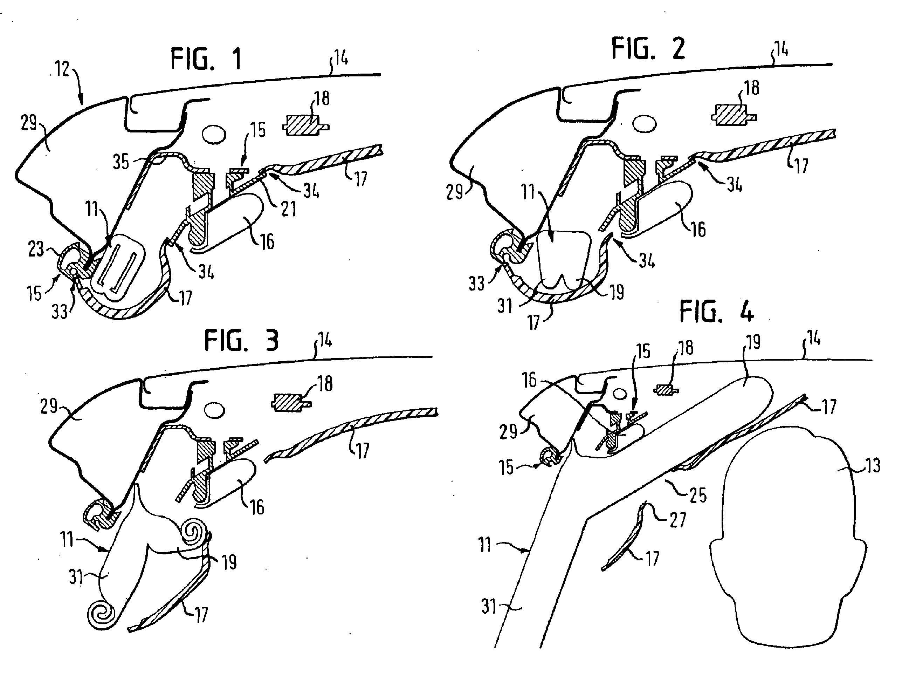

Fig. 1 zeigt einen Teil des Dachbereiches 12 eines Kraftfahrzeugs mit einem Dachlängsträger 29 und einem mit diesem verbundenen Dachabschnitt 14.

Innen ist das Fahrzeugdach 12 mit einer Dachauskleidung 17 versehen, die an einer dachfesten Halterung 23 in Form einer Gummilippe über Clipsverbindungen 33 und an einer Halterung 21 durch einfache Überlappungen 34 (vgl. auch Fig. 2) am Fahrzeugdach 12 lösbar fixiert ist. Die Überlappungen 24 sind durch den Montageprozess bedingt. Es können auch andere Verbindungsarten als Clips- und Überlappungsverbindungen vorgesehen werden.

Die Halterung 21 ist Bestandteil einer Haltegriffanordnung, deren am Fahrzeugdach fest verankerter Haltegriff 16 in den Figuren in einer eingeklappten Ruhestellung dargestellt ist.

Die Dachauskleidung 17 ist im Bereich des Haltegriffs 16 mit einer Aussparung 25 versehen, die von kleinerer Ausdehnung ist als die Halterung 21, und über den die Aussparung 25 begrenzenden Randbereich 27, mit dem die Dachauskleidung 17 die Halterung 21 überlappend hintergreift, an der Halterung 21 fixiert (vgl. auch Fig. 4). Zur Befestigung des Haltegriffs 16 am Fahrzeugdach 12 sind also nicht lediglich Löcher für Befestigungsschrauben in der Dachauskleidung 17 ausgebildet, sondern die Dachauskleidung 17 ist im Bereich der am Fahrzeugdach 12 zu befestigenden Struktur - hier des Haltegriffs 16 - relativ großflächig, d.h. entsprechend der Ausdehnung der jeweiligen Struktur ausgespart, so dass die Dachauskleidung 17 im Wesentlichen ungestört durch die jeweilige Struktur vom Fahrzeugdach 12 weg bewegt werden kann. Dieses Prinzip, das hier beispielhaft für den Haltegriff 16 gezeigt ist, kann grundsätzlich bei allen harten Dachstrukturen zum Einsatz kommen.

Eine weitere harte Dachstruktur, vor welcher der Fahrzeuginsasse zu schützen ist, existiert in Form einer Führungseinrichtung 18 für ein Schiebedach.

In einem von der Dachauskleidung 17 im Bereich des Übergangs zwischen Fahrzeugdach 12 und Fahrzeugseitenwand, dem Dachlängsträger 29 und einem weiteren Dachprofilelement 35 begrenzten Hohlraum ist ein Luftsackmodul angeordnet. Das Luftsackmodul, von dem in den Figuren der Einfachheit halber unter Weglassen des Gasgenerators und weiterer Modulkomponenten lediglich der aufblasbare Luftsack 11 dargestellt ist, ist an der dem Fahrzeuginnenraum zugewandten Seite des Dachlängsträgers 29 fixiert.

Der Luftsack 11 und die Dachauskleidung 17 sind derart ausgebildet und aufeinander abgestimmt angeordnet, dass bei einem Unfall zu Beginn des Aufblasvorgangs die Dachauskleidung 17 von dem sich aufblasenden Luftsack 11 weg vom Fahrzeugdach 12 in Richtung des Fahrzeuginnenraumes gedrückt wird. Die Clipsverbindungen 33 und die Überlappungen 34 zur Fixierung der Dachauskleidung 17 am Fahrzeugdach 12 werden hierdurch gelöst, wie in Fig. 2 und Fig. 3 dargestellt ist. Die erfindungsgemäße Airbaganordnung ist dabei derart ausgelegt, dass die Ablösung der Dachauskleidung 17 in einer auf die Entfaltungscharakteristik des Luftsacks 11 abgestimmten Weise erfolgt. Das Lösen der Fixierung zwischen Dachauskleidung 17 und Fahrzeugdach 12 kann zerstörungsfrei oder unter zumindest teilweiser Zerstörung der an der Fixierung beteiligten Abschnitte der Dachauskleidung 17 und/oder des Fahrzeugdaches 12 bzw. der betreffenden Halterungen erfolgen, an den Überlappungen 34 im Wesentlichen einfach durch Nachgeben der Dachauskleidung 17.

In Fig. 2 ist bereits die Auslegung des erfindungsgemäßen Luftsacks 11 als sogenannter "Butterfly Bag" erkennbar. Der Luftsack 11 umfasst zwei im vollständig aufgeblasenen Zustand (vgl. Fig. 4) jeweils eine flächige Gestalt aufweisende Schutzabschnitte. Wie in Fig. 3 dargestellt ist, ist sowohl die Faltung eines Kopfschutzabschnittes 19 als auch eines Seitenschutzabschnittes 31 des Luftsacks 11 derart gebildet, dass sich die Abschnitte 19, 31 jeweils beim Aufblasen entrollen, wobei die relative Anordnung von Luftsack 11 und Dachauskleidung 17 so gewählt sein kann, dass zumindest der Kopfschutzabschnitt 19 beim Aufblasen gewissermaßen auf der Rückseite der Dachauskleidung abrollt. Alternativ zu einer derartigen Rollfaltung kann grundsätzlich eine beliebige Luftsackfaltung vorgesehen sein, beispielsweise in Form einer so genannten Z-Faltung.

Wie Fig. 4 zeigt, kann die Dachauskleidung 17 von dem sich aufblasenden Luftsack 11 und insbesondere dessen Kopfschutzabschnitt 19 so weit vom Fahrzeugdach 12 weg bewegt werden, dass sich der Kopfschutzabschnitt 19 längs der Rückseite der Dachauskleidung 17 an dem Haltegriff 16 vorbei ausbreiten und in die in Fig. 4,dargestellte Schutzposition gelangen kann. In dieser Schutzposition, in welcher der Kopfschutzabschnitt 19 die Dachauskleidung 17 gewissermaßen "hinterschossen" hat, ist der Kopf 13 eines Fahrzeuginsassen vor harten Dachstrukturen 15, wie sie beispielsweise von dem Handgriff 16, der Befestigungskonstruktion 15 des Handgriffs 16, der Halterung 23 und der Führungseinrichtung 18 gebildet sind, geschützt.

### Bezugszeichenliste

- 11: Luftsack
- 12: Dachbereich, Fahrzeugdach
- 13: Kopf
- 14: Dachabschnitt
- 15: harte Dachstruktur, Befestigungskonstruktion, Halterung
- 16: harte Dachstruktur, Haltegriff
- 17: Dachauskleidung
- 18: harte Dachstruktur, Führungseinrichtung
- 19: Kopfschutzabschnitt
- 21: Halterung
- 23: Halterung
- 25: Aussparung
- 27: Randbereich
- 29: Dachlängsträger
- 31: Seitenschutzabschnitt
- 33: Fixierung, Clipsverbindung
- 34: Fixierung, Überlappung
- 35: Dachprofilelement

## Patentansprüche

1. Airbaganordnung für Kraftfahrzeuge,
mit wenigstens einem aufblasbaren Luftsack (11), der im zusammengefalteten Zustand im Dachbereich (12) des Fahrzeugs anbringbar ist und im aufgeblasenen Zustand eine den Kopf (13) eines Fahrzeuginsassen vor einem Kontakt mit harten Dachstrukturen (15, 16, 18) schützende Position einnimmt, und
mit einer die harten Strukturen (15, 18) verdeckenden und/oder im Bereich der harten Strukturen (16) ausgesparten Dachauskleidung (17,
wobei sich beim Aufblasen des Luftsacks (11) zumindest ein Kopf schutzabschnitt (19) zwischen die Dachauskleidung (17) und die harten Strukturen (15, 16, 18) in die Schutzposition bewegt, **dadurch gekennzeichnet,**
**dass** die Dachauskleidung (17) insbesondere zu Beginn des Aufblasvorgangs durch den sich ausbreitenden Luftsack (11) vom Fahrzeugdach weg nach innen in eine Freigabeposition bewegbar ist, in welcher sich der Kopfschutzabschnitt (19) an harten Strukturen (16), die seiner Ausbreitung ansonsten im Wege stehen würden, vorbei in die Schutzposition ausbreiten kann.

2. Airbaganordnung nach Anspruch 1,
**dadurch gekennzeichnet,**
**dass** die Dachauskleidung (17) als Führung für den sich ausbreitenden Kopfschutzabschnitt (19) des Luftsacks (11) ausgebildet ist.

3. Airbaganordnung nach Anspruch 1 oder 2,
**dadurch gekennzeichnet,**
**dass** die Dachauskleidung (17) an zumindest einer dachfesten Halterung (21, 23) fixierbar und die Fixierung (33, 34) durch den sich ausbreitenden Luftsack (11) lösbar ist.

4. Airbaganordnung nach Anspruch 3,
**dadurch gekennzeichnet,**
**dass** zur Fixierung der Dachauskleidung (17) an der Halterung (21, 23) eine Clipsverbindung (33) und/oder eine Überlappung (34) vorgesehen ist.

5. Airbaganordnung nach einem der vorhergehenden Ansprüche,
**dadurch gekennzeichnet,**
**dass** die Dachauskleidung (17) mit einem eine Aussparung (25) für eine harte Dachstruktur (16) begrenzenden Randbereich (27) am Fahrzeugdach (12) fixierbar ist.

6. Airbaganordnung nach einem der vorhergehenden Ansprüche,
**dadurch gekennzeichnet,**
**dass** die Dachauskleidung (17) im Bereich eines am Fahrzeugdach (12) befestigten Haltegriffes (16) für einen Fahrzeuginsassen ausgespart ist.

7. Airbaganordnung nach einem der vorhergehenden Ansprüche,
**dadurch gekennzeichnet,**
**dass** der Luftsack (11) im Bereich des Übergangs zwischen Fahrzeugdach (12) und Fahrzeugseitenwand, insbesondere an einem Dachlängsträger (29), anbringbar ist.

8. Airbaganordnung nach einem der vorhergehenden Ansprüche,
**dadurch gekennzeichnet,**
**dass** der Luftsack (11) zusätzlich einen Seitenschutzabschnitt (31) aufweist.

9. Airbaganordnung nach Anspruch 8,
**dadurch gekennzeichnet,**
**dass** der Kopfschutzabschnitt (19) und der Seitenschutzabschnitt (31) des Luftsacks (11) im aufgeblasenen Zustand jeweils von flächiger Gestalt sind.

10. Airbaganordnung nach Anspruch 8 oder 9,
**dadurch gekennzeichnet,**
**dass** in einem senkrecht zur Fahrzeuglängsachse verlaufenden Querschnitt der Kopfschutzabschnitt (19) und der Seitenschutzabschnitt (31) des Luftsacks (11) im aufgeblasenen Zustand einen stumpfen Winkel bilden.

11. Airbaganordnung nach einem der Ansprüche 8 bis 10,
**dadurch gekennzeichnet,**
**dass** der Luftsack (11) im aufgeblasenen Zustand von schmetterlingsartiger Gestalt ist, wobei der Kopfschutzabschnitt (19) und der Seitenschutzabschnitt (31) des Luftsacks (11) die Schmetterlingsflügel bilden.

12. Airbaganordnung nach einem der vorhergehenden Ansprüche,
**dadurch gekennzeichnet,**
**dass** die Faltung des Luftsacks (11) derart gebildet ist, dass zumindest der Kopfschutzabschnitt (19) des Luftsacks (11) durch das Auf blasen entrollbar ist.

## Claims

1. Airbag arrangement for motor vehicles,
with at least one inflatable airbag (11) that can be arranged in the roof area (12) of the vehicle when folded and when inflated takes a position protecting the head (13) of a vehicle occupant against contact with hard roof structures (15,16,18), and
roof lining (17) covering the hard structures (15, 18) and/or being recessed in the area of the hard structures (16),
wherein with the inflation of the airbag (11) at least one head protection section (19) moves between the roof lining (17) and the hard structures (15, 16, 18) into the protecting position,
**characterized in that**
the roof lining (17) is movable by the spreading airbag (11), in particular at the beginning of the inflation procedure, away from the vehicle roof inward into a release position, in which the head protection section (19) can spread past hard structures (16), which otherwise would hinder its spreading, into the protecting position.

2. Airbag arrangement according to claim 1,
**characterized in that**
the roof lining (17) is adapted as guide for the spreading head protection section (19) of the airbag (11).

3. Airbag arrangement according to claim 1 or 2,
**characterized in that**
the roof lining (17) is fixable at at least one roof-fixed mounting (21, 23) and the fixing (33, 34) is releasable by the spreading airbag (11).

4. Airbag arrangement according to claim 3,
**characterized in that**
a clip connection (33) and/or an overlap (34) is provided for fixing the roof lining (17) at the mounting (21, 23).

5. Airbag arrangement according to one of the preceding claims,
**characterized in that**
the roof lining (17) is fixable at the vehicle roof (12) with a boundary region (27) bounding a recess (25) for a hard roof structure (16).

6. Airbag arrangement according to one of the preceding claims,
**characterized in that**
the roof lining (17) is recessed in the area of a handle (16) for a vehicle occupant, mounted at the vehicle roof (12).

7. Airbag arrangement according to one of the preceding claims,
**characterized in that**
the airbag (11) is attachable in the region of the transition between the vehicle roof (12) and the vehicle side panel, in particular at a longitudinal roof beam (29).

8. Airbag arrangement according to one of the preceding claims,
**characterized in that**
the airbag (11) additionally comprises a side protection section (31).

9. Airbag arrangement according to claim 8,
**characterized in that**
in the inflated state, the head protection section (19) and the side protection section (31) of the airbag (11) are of planar shape.

10. Airbag arrangement according to claim 8 or 9,
**characterized in that**
a cross section perpendicular to the longitudinal vehicle axis the head in protection section (19) and the side protection section (31) of the airbag (11) form an obtuse angle in the inflated state.

11. Airbag arrangement according to one of the claims 8 to 10,
**characterized in that**
the airbag (11) in the inflated state is of butterfly-like shape, the head protection section (19) and the side protection section (31) of the airbag (11) forming the butterfly wings.

12. Airbag arrangement according to one of the preceding claims,
**characterized in that**
the folding of the airbag (11) is such that at least the head protection section (19) of the airbag (11) is unrollable by the inflation.

## Revendications

1. Agencement à airbag pour véhicule automobile,
comprenant au moins un coussin gonflable (11) qui peut être logé, dans la situation repliée, dans la zone de toiture (12) du véhicule et qui occupe, dans la situation gonflée, une position protégeant la tête (13) d'un occupant du véhicule vis-à-vis d'un contact avec des structures dures (15, 16, 18) de la toiture, et
comprenant un habillage de toiture qui recouvre les structures dures (15, 18) et/ou qui est échancré dans la zone des structures dures (16),
tel que lors du gonflage du coussin gonflable (11) au moins un tronçon de protection de tête (19) se déplace pour venir en position de protection entre l'habillage de toiture (17) et les structures dures (15, 16, 18),
**caractérisé en ce que** l'habillage de toiture (17) est déplaçable, en particulier au commencement du processus de gonflage, au moyen du coussin gonflable (11) qui s'élargit, en éloignement depuis la toiture du véhicule en direction de l'intérieur jusque dans une position de libération dans laquelle le tronçon de protection de tête (19) est capable de se déployer jusque dans la position de protection en passant devant les structures dures (16) qui feraient sinon obstacle à son déploiement.

2. Agencement à airbag selon la revendication 1,
**caractérisé en ce que** l'habillage de toiture (17) est réalisé à titre de guidage pour le tronçon de protection de tête (19) du coussin gonflable (11) qui se déploie.

3. Agencement à airbag selon la revendication 1 ou 2,
**caractérisé en ce que** l'habillage de toiture (17) est susceptible d'être fixé à au moins une monture (21, 23) solidaire de la toiture, et la fixation (33, 34) est détachable par le coussin gonflable (11) qui se déploie.

4. Agencement à airbag selon la revendication 3,
**caractérisé en ce que** pour la fixation de l'habillage de toiture (17) sur la monture (21, 23), il est prévu une liaison à clips (33) et/ou un chevauchement (34).

5. Agencement à airbag selon l'une des revendications précédentes,
**caractérisé en ce que** l'habillage de toiture (17) est susceptible d'être fixé sur la toiture (12) du véhicule par une zone de bordure (27) qui délimite une échancrure (25) pour une structure dure (16) de la toiture.

6. Agencement à airbag selon l'une des revendications précédentes,
**caractérisé en ce que** l'habillage de toiture (17) est échancré dans la région d'une poignée de maintien (16), fixée sur la toiture (12) du véhicule, pour un occupant du véhicule.

7. Agencement à airbag selon l'une des revendications précédentes,
**caractérisé en ce que** le coussin gonflable (11) est susceptible d'être monté dans la zone de la transition entre la toiture (12) et la paroi latérale du véhicule, en particulier sur un longeron de support (29) de la toiture.

8. Agencement à airbag selon l'une des revendications précédentes,
**caractérisé en ce que** le coussin gonflable (11) comprend additionnellement un tronçon de protection latéral (31).

9. Agencement à airbag selon la revendication 8,
**caractérisé en ce que** le tronçon de protection de tête (19) et le tronçon de protection latéral (31) du coussin gonflable (11) présentent chacun une configuration surfacique dans la situation gonflée.

10. Agencement à airbag selon la revendication 8 ou 9,
**caractérisé en ce que**, dans une coupe perpendiculaire à l'axe longitudinale du véhicule, le tronçon de protection de tête (19) et le tronçon de protection latéral (31) du coussin gonflable (11) définissent dans la situation gonflée un angle obtus.

11. Agencement à airbag selon l'une des revendications 8 à 10,
**caractérisé en ce que** le coussin gonflable (11) présente, dans la situation gonflée, une configuration semblable à un papillon, dans laquelle le tronçon de protection de tête (19) et le tronçon de protection latérale (31) du coussin gonflable (11) forment les ailes du papillon.

12. Agencement à airbag selon l'une des revendications précédentes,
**caractérisé en ce que** le pliage du coussin gonflable (11) est conçu de telle manière qu'au moins le tronçon de protection de tête (19) du coussin gonflable (11) est capable de se dérouler par le gonflage.
